# FASCICULE DE BREVET EUROPEEN

(11) **EP 3 418 124 B1**
(45) Date de publication et mention de la délivrance du brevet: **25.03.2020**
(21) Numéro de dépôt: 18178159.2
(22) Date de dépôt: 18.06.2018
(51) Int. Cl.: B60R 7/04, B60N 2/30, B60N 2/882

(54) **SIEGE RABATTABLE AVEC DISPOSITIF DE RANGEMENT POUR APPUI-TETE**
ZUSAMMENKLAPPBARER SITZ MIT VORRICHTUNG ZUM VERSTAUEN DER KOPFSTÜTZE
FOLDING SEAT WITH STORAGE DEVICE FOR HEADREST

(30) Priorité: 20.06.2017 FR 1755629
(43) Date de publication de la demande: 26.12.2018
(73) Titulaire: RENAULT s.a.s., 92100 Boulogne-Billancourt (FR)
(72) Inventeur: CAFFARRI, SERGE, 78290 CROISSY SUR SEINE (FR)

(56) Documents cités:
- EP-A1- 1 382 492
- US-A- 5 971 467
- US-A1- 2001 040 400

## Description

La présente invention concerne de manière générale l'agencement d'un habitacle de véhicule.

Elle concerne plus particulièrement un siège de véhicule comportant :
- une structure porteuse qui délimite une cavité,
- une assise montée mobile sur ladite structure porteuse, entre une position d'utilisation dans laquelle elle recouvre ladite cavité et une position escamotée dans laquelle elle laisse accès à ladite cavité,
- un dossier monté mobile en basculement sur ladite structure porteuse, et
- un appui-tête apte à être monté sur le dossier.

L'invention concerne également un véhicule équipé d'un tel siège.

L'invention trouve une application particulièrement avantageuse dans la réalisation d'un siège passager, c'est-à-dire d'un siège prévu pour être situé à côté du siège conducteur du véhicule.

### ARRIERE-PLAN TECHNOLOGIQUE

Les véhicules automobiles comprennent généralement deux sièges avant situés côte-à-côte. L'un des sièges, appelé siège conducteur, est situé en regard du volant tandis que l'autre, appelé siège passager, permet d'accueillir un éventuel passager.

Il est connu d'équiper ce siège passager d'un dossier rabattable vers l'avant. Ainsi, lorsqu'il n'y a pas de passager dans le véhicule, le conducteur peut basculer ce dossier afin de libérer un espace de chargement communiquant avec l'arrière du véhicule. Cet espace de chargement supplémentaire s'avère particulièrement intéressant lorsque le conducteur souhaite embarquer dans le véhicule des objets de longueurs importantes.

On connait ainsi du document EP1401677 un siège repliable, dont l'assise peut basculer vers l'avant, dont l'appui-tête peut basculer vers l'avant contre le dossier, et dont le dossier peut ensuite basculer vers l'avant, en lieu et place de l'assise.

Un intérêt de ce siège est qu'une fois que ses composants sont basculés, la face arrière du dossier crée, avec le reste du plancher du véhicule, une surface plane facilitant la charge d'objets de grandes longueurs.

La bascule de l'appui-tête vers l'avant permet d'éviter que le dossier ne vienne en appui contre la planche de bord du véhicule, ce qui empêcherait le dossier de basculer complètement.

Un inconvénient de cette solution technique est qu'elle nécessite de prévoir un appui-tête qui puisse basculer par rapport au dossier vers l'avant, en appui contre ce dernier, ce qui s'avère onéreux.

Le document US5971476 divulgue également un siège repliable, dont l'assise peut basculer vers l'avant.

### OBJET DE L'INVENTION

Pour remédier à ce problème technique, la présente invention propose un siège tel que défini dans l'introduction, dans lequel ledit appui-tête est apte à être démonté du dossier et dans lequel la structure porteuse comporte des moyens de fixation adaptés à bloquer l'appui-tête dans une position telle manière qu'une partie au moins dudit appui-tête soit logée dans ladite cavité.

Ainsi, grâce à l'invention, il est possible de démonter l'appui-tête et de le ranger dans une cavité prévue à cet effet. Cette solution s'avère simple et peu onéreuse, puisqu'elle profite du caractère généralement démontable des appuis-tête qu'on trouve dans le commerce.

D'autres caractéristiques avantageuses et non limitatives du siège conforme à l'invention sont les suivantes :
- l'appui-tête comporte une garniture et une armature qui comprend au moins une tige adaptée à être montée dans un fourreau du dossier et les moyens de fixation comprennent des premiers moyens d'encliquetage adaptés à clipser ladite tige ;
- l'armature de l'appui-tête comporte deux tiges et les premiers moyens d'encliquetage comprennent deux premiers clips adaptés à respectivement encliqueter lesdites deux tiges ;
- les moyens d'encliquetage sont situés hors de ladite cavité ;
- ladite structure porteuse comporte deux flancs et une coque qui s'étend entre les deux flancs, qui délimite ladite cavité, et qui porte les premiers moyens d'encliquetage ;
- il est prévu des moyens de verrouillage de l'assise en position escamotée ;
- les moyens de verrouillage forment des moyens de fixation de l'appui-tête ;
- l'assise comporte au moins un arbre articulé sur la structure porteuse et les moyens de verrouillage sont fixés audit arbre ;
- l'assise comporte deux bielles chacune articulée, à une extrémité, sur une armature d'assise et fixée, à une autre extrémité, audit au moins un arbre ;
- l'appui-tête comporte une garniture et une armature qui comprend au moins une tige adaptée à être montée dans un fourreau du dossier et les moyens de verrouillage comprennent des seconds moyens d'encliquetage adaptés à clipser ladite tige.

L'invention concerne aussi un véhicule comportant un siège conducteur et un siège passager qui est tel que défini ci-dessus.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique des composants d'un siège repliable conforme à l'invention et des liens de mobilité entre ces composants;
- la figure 2 est une vue schématique du siège de la figure 1, en place dans l'habitacle d'un véhicule automobile ; et
- la figure 3 est une vue schématique d'une partie inférieure du siège de la figure 1, représenté avec son assise en position déportée, ce qui dévoile une cavité prévue pour recevoir l'appui-tête du siège ;
- la figure 4 est une vue schématique du siège en position repliée avec l'appui-tête escamoté.

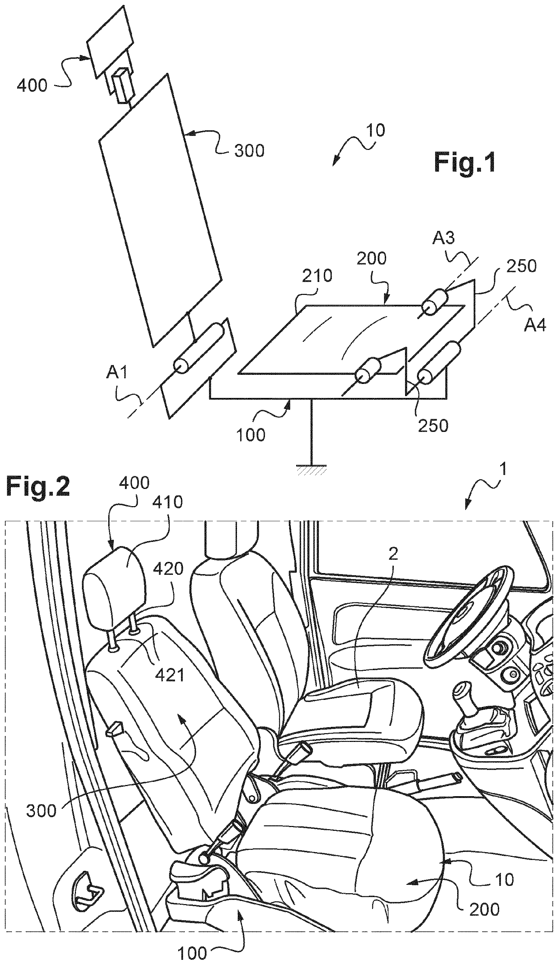

Sur la figure 1, on a représenté de manière très schématique un siège 10 prévu pour être monté dans un habitacle d'un véhicule, ici un véhicule automobile.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes « inférieur » et « supérieur » seront utilisés par rapport à ce véhicule automobile, la partie inférieure d'un élément désignant la partie de cet élément qui est située du côté du plancher du véhicule et la partie supérieure désignant la partie de cet élément qui est située du côté du toit.

Par ailleurs, dans la suite de la description, on dira de deux éléments qu'ils sont « articulés » lorsqu'ils seront connectés ensemble au moyen d'une simple liaison pivot, avec donc un seul et unique degré de liberté.

Tel qu'il apparaît sur la figure 2, ce véhicule automobile 1 est un véhicule « utilitaire », c'est-à-dire un véhicule comportant une unique rangée de sièges. Il ne comporte en revanche pas de siège ou de banquette arrière, puisque l'ensemble de la zone arrière du véhicule constitue un coffre de chargement. En variante, il pourrait s'agir de tout autre type de véhicule automobile.

Ce véhicule automobile 1 comporte ici exactement deux sièges, dont un siège conducteur 2 situé en face du volant 3 du véhicule, et un siège passager 10 situé à côté du siège conducteur 2. Tel qu'il est représenté sur la figure 2, le siège passager 10 est situé à droite du siège conducteur 2.

La présente invention porte alors plus précisément sur ce siège passager 10.

Comme le montre schématiquement la figure 1, ce siège passager 10 comporte une assise 200 et un dossier 300 montés sur une même structure porteuse 100.

L'assise 200 et le dossier 300 comportent chacun une armature recouverte, pour le confort du passager, d'une garniture.

Sur les figures 1 et 2, l'assise 200 et le dossier 300 sont représentés en position d'utilisation, c'est-à-dire en position pour accueillir un passager.

Dans cette position d'utilisation, l'assise 200 s'étend sensiblement horizontalement (à 20 degrés près) et le dossier 300 est légèrement incliné vers l'arrière (avec un angle compris entre 5 et 45 degrés par rapport à la verticale).

Ce siège passager 10 est repliable, c'est-à-dire qu'il peut basculer de manière à libérer de l'espace de chargement dans le véhicule.

Les composants du siège passager 10 présentent à cet effet de nombreuses mobilités. Pour bien comprendre l'invention, on peut alors tout d'abord décrire brièvement ces mobilités, en référence à la figure 1.

Ici, la structure porteuse 100 est représentée comme étant fixée au plancher du véhicule.

Bien entendu, en variante, elle pourra être montée mobile sur le plancher du véhicule. Elle pourrait par exemple être montée sur le plancher du véhicule avec une mobilité de translation selon un axe parallèle ou orthogonal à l'axe longitudinal du véhicule.

Le dossier 300 est articulé sur la structure porteuse 100 autour d'un axe inférieur A1. Cet axe inférieur A1 est globalement situé sous le bord inférieur du dossier 300. Il s'étend en pratique horizontalement et orthogonalement à l'axe longitudinal du véhicule automobile 1.

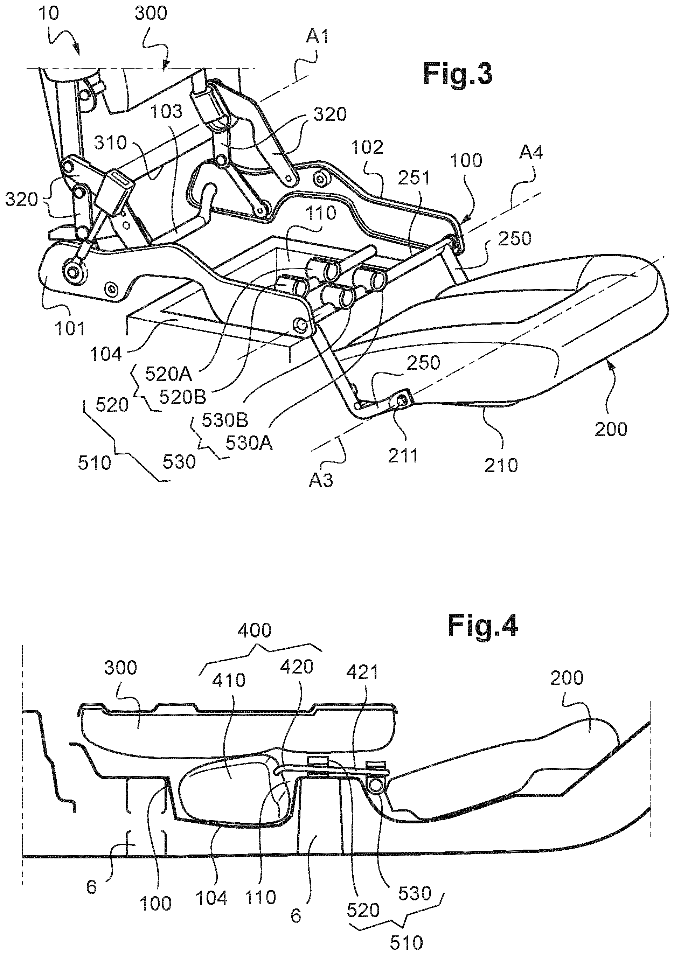

Ainsi, le dossier 300 peut basculer depuis sa position d'utilisation (voir figure 2) jusqu'à une position rabattue vers l'avant (voir figure 4).

Ici, le dossier 300 est équipé sur son bord supérieur d'un appui-tête 400, monté de façon à pouvoir coulisser par rapport au dossier, de manière à ce que sa hauteur puisse être ajustée à la taille du passager. Dans le cadre de l'invention, cet appui-tête 400 est monté sur le dossier 300 de façon à pouvoir être détaché de ce dernier.

L'assise 200 est pour sa part montée mobile sur la structure porteuse 100 au moyen de bielles 250.

Ces bielles 250 sont chacune articulées, d'un côté, sur l'armature 210 de l'assise 200 et, de l'autre, sur la structure porteuse 100.

Chaque bielle 250 présente ainsi :
- une première mobilité de pivotement par rapport à l'armature 210 de l'assise 200, autour d'un premier axe de pivot A3, et
- une seconde mobilité de pivotement par rapport à la structure porteuse 100, autour d'un second axe de pivot A4.

Ce second axe de pivot A4 est globalement situé sous le bord avant de l'assise 200 (en position d'utilisation). Il s'étend horizontalement et orthogonalement à l'axe longitudinal du véhicule automobile.

Le premier axe de pivot A3 s'étend quant à lui parallèlement au second axe de pivot A4.

Ainsi, l'assise 200 peut être déplacée depuis sa position d'utilisation (voir figure 2) jusqu'à une position déportée vers l'avant (voir figures 3 et 4), sous la planche de bord du véhicule, en conservant une orientation sensiblement horizontale. On peut alors dire de l'assise 200 qu'elle est montée sur la structure porteuse 100 avec une mobilité de translation circulaire.

Grâce à la position de l'axe inférieur A1 (en dessous du dossier 300), lorsque le dossier 300 bascule en position rabattue, il se place en lieu et place de l'assise 200.

L'objectif premier est ainsi que sa face arrière s'étende le plus horizontalement possible, par exemple avec un angle de 5 degrés maximum avec l'horizontale.

L'objectif second est que sa face arrière s'étende à hauteur du plancher du coffre (de façon à ne pas faire apparaître de marche entre le coffre et l'habitacle lorsque le dossier 300 est rabattu).

On comprend ici que le dossier 300 ne peut être positionné en position rabattue vers l'avant que si l'assise 200 a préalablement été escamotée vers l'avant.

Le problème est alors qu'étant donnée la hauteur du dossier 300 et de l'appui-tête 400, lorsque le dossier 300 bascule en lieu et place de l'assise 200, l'appui-tête 400 risque de venir buter contre l'assise 100.

Pour éviter ce problème, selon l'invention, il est prévu de pouvoir loger et fixer l'appui-tête dans une cavité 110 située le dossier lorsque ce dernier est en position basculée.

Pour cela, la structure porteuse 100 délimite une cavité 110 dans laquelle une partie au moins de l'appui-tête 400 peut être logé lorsque l'assise 200 est en position déportée vers l'avant et que le dossier 300 est basculé vers l'avant.

On peut maintenant décrire en détail les composants du siège passager 10.

Comme le montre la figure 2, l'appui-tête comporte une garniture 410 qui entoure une armature 420 métallique. Cette armature 420 comprend ici deux tiges 421 parallèles, adaptées à coulisser dans des fourreaux prévus dans le bord supérieur du dossier 300. Cette configuration étant bien connue, elle ne sera pas ici davantage décrite.

Comme le montre la figure 3, la structure porteuse 100 comporte deux flancs 101, 102 latéraux et symétriques, connectés ensemble à l'arrière par une traverse arrière 103 et à l'avant par un arbre avant 251 de l'assise 200.

On pourra prévoir de souder ces deux flancs 101, 102 sur deux traverses 6 du châssis du véhicule (voir figure 4). En variante, on pourrait prévoir de les fixer à deux rails pour offrir à la structure porteuse 100 un degré de mobilité en translation par rapport au plancher.

La structure porteuse 100 comporte en outre ici une coque 104 qui s'étend entre les deux flans 101 et 102 et qui délimite la cavité 110.

Cette coque 104 présente une forme de plaque emboutie en son centre de façon à former la cavité 110. La cavité 110 est ainsi ouverte vers le haut.

La coque 104 pourrait être fixée aux flancs 101, 102. Toutefois, dans le mode de réalisation représenté sur la figure 4, elle est ici fixée aux deux traverses 6 du châssis du véhicule (lesquelles traverses 6 forment un ensemble monobloc avec les flancs 101, 102).

L'arbre avant 251, qui relie entre eux les deux flancs 101, 102, est monté mobile en rotation sur les deux flancs 101, 102 de cette structure porteuse 100, autour du second axe de pivot A4.

Les bielles 250, dont on rappelle qu'elles connectent l'armature 210 de l'assise 200 à la structure porteuse 100, sont alors soudées par une première de leurs extrémités sur cet arbre avant 251, ce qui leur offre leur mobilité de rotation autour du second axe de pivot A4.

Les bielles 250 sont par ailleurs articulées par leurs secondes extrémités sur des pions 211 soudés sur l'armature 210 de l'assise 200. En pratique, les pions 211 sont placés environ à mi-longueur de l'assise 200. De cette manière, pendant le basculement des bielles 250 autour du second axe de pivot A4, il est possible de maintenir l'assise 200 sensiblement à l'horizontale de façon à s'assurer qu'aucun obstacle ne se trouve sur la trajectoire de l'assise 200.

Comme le montre la figure 2, lorsque le dossier 300 et l'assise 200 sont en position d'utilisation, la cavité 110 est fermée sur le dessus par l'assise 200.

Comme le montre la figure 3, lorsque le dossier 300 est en position d'utilisation et que l'assise 200 est en position escamotée, la cavité 110 est accessible par le dessus, ce qui permet à l'usager d'y rapporter l'appui-tête 400.

Comme le montre le figure 4, l'appui-tête 400 y est rapporté de façon à ce que la face avant de sa garniture 410 se trouve orienté vers le bas et que les tiges 421 de son armature 420 soient situés hors de la cavité 110 et soient pointées vers l'avant.

De cette façon, comme le montre la figure 4, il est possible de faire basculer le dossier 300 en position horizontale en évitant que ce dernier ne vienne percuter l'assise 200.

Comme cela a été mentionné supra, la structure porteuse 100 comporte des moyens de fixations 510 adaptés à bloquer l'appui-tête 400 dans la position précitée.

Ici, ces moyens de fixations 510 sont de deux sortes. Ils comportent ainsi :
- des premiers moyens d'encliquetage 520 permettant de cliper les tiges 421 de l'appui-tête 400 sur la coque 104, et
- des moyens de verrouillage 530, qui se présentent ici sous la forme de seconds moyens d'encliquetage et qui permettent, d'une part, de bloquer l'appui-tête 400 en position fixe, mais aussi de bloquer l'assise 200 en position escamotée.

Comme le montrent les figures 3 et 4, les premiers moyens d'encliquetage se présentent ici sous la forme de deux clips 520A, 520B.

Chaque clip 520A, 520B a une forme de tube fendu, ce qui lui permet de recevoir transversalement l'une des tiges 421 de l'appui-tête 400.

Ces deux clips 520A, 520B sont situés hors de la cavité 110, avec le même écartement que celui existant entre les tiges 421.

Les clips 520A, 520B sont fixés à la coque 104 ou au châssis du véhicule, dont on rappelle qu'il forme ici une seule pièce monobloc avec la structure porteuse 100.

Les seconds moyens d'encliquetage comprennent aussi des clips 530A, 530B homologues de ceux décrits ci-dessus. Toutefois, ces clips 530A, 530B sont disposés avantageusement au niveau de l'axe de rotation A4 (visible sur la figure 3) et sont fixés sur l'arbre avant 251, afin de maintenir l'assise 200 en position escamotée quand l'appui-tête 400 est en place.

Les deux clips 530A, 530B sont plus précisément fixés à l'arbre avant 251 de telle sorte que, lorsque l'assise 200 est en position escamotée, leurs axes longitudinaux s'étendent dans le prolongement des axes longitudinaux des clips 520A, 520B.

De cette façon, comme le montre la figure 4, il n'est possible de positionner les tiges 421 de l'appui-tête 400 dans les quatre clips 520A, 520B, 530A, 530B que lorsque l'assise 200 est en position escamotée.

Comme cela a déjà été mentionné en référence à la figure 1, le dossier 300 est articulé sur la structure porteuse 100 autour de l'axe inférieur A1.

Pour cela, comme le montre bien la figure 3, le siège 10 comporte ici un ensemble de biellettes 320 réparties par paire de chaque côté du dossier 300.

Chaque biellette 320 est articulée, à une de ses extrémités, sur l'un des flancs 101, 102 de la structure porteuse 100, et, à l'autre de ses extrémités, sur l'ossature 310 du dossier 300. Ces biellettes 320 sont conçues pour permettre au dossier 300 de basculer selon un mouvement de pseudo-rotation autour de l'axe inférieur A1.

Il est par ailleurs prévu des moyens de blocage des mobilités du dossier 300 et de l'assise 200, qui permettent de bloquer le dossier 300 et l'assise 200 en position d'utilisation. Il est aussi prévu des moyens de déverrouillage de ces moyens de blocage, qui permettent de libérer les mobilités du dossier 300 et de l'assise 200. Ces moyens de blocage et de déverrouillage étant bien connus de l'homme du métier, ils ne seront pas ici décrits.

La présente invention n'est nullement limitée au mode de réalisation décrit et représenté, mais l'homme du métier saura y apporter toute variante conforme à l'invention.

Ainsi pourrait-on prévoir que l'assise soit prévue pour basculer par rapport à la structure porteuse selon un simple mouvement de rotation, avec un angle d'environ 180 degrés.

Selon une autre variante de l'invention, on pourrait prévoir que les moyens de fixation de l'appui-tête ne comprennent que les premiers moyens d'encliquetage ou au contraire que les seconds moyens d'encliquetage.

On pourrait encore en variante prévoir que les moyens de fixation de l'appui-tête soient non pas des moyens d'encliquetage mais des moyens de vissage ou tout autre type de moyen adapté.

Selon une autre variante, il serait envisageable que les premiers et/ou seconds moyens d'encliquetage ne comportent qu'un seul clip (notamment dans le cas où l'appui-tête ne comporte qu'une seule tige centrale).

## Revendications

1. Siège (10) de véhicule comportant :
- une structure porteuse (100) qui délimite une cavité (110),
- une assise (200) montée mobile sur ladite structure porteuse (100), entre une position d'utilisation dans laquelle elle recouvre ladite cavité (110) et une position escamotée dans laquelle elle laisse accès à ladite cavité (110),
- un dossier (300) monté mobile en basculement sur ladite structure porteuse (100) entre une position d'utilisation et une position rabattue, et
- un appui-tête (400) apte à être monté sur le dossier (300),
- ledit appui-tête (400) étant apte à être démonté du dossier (300), **caractérisé en ce que** la structure porteuse (100) comporte des moyens de fixation (510) adaptés à bloquer l'appui-tête (400) dans une position telle qu'une partie au moins dudit appui-tête (400) soit logée dans ladite cavité (110), et **en ce qu'**il est prévu des moyens de verrouillage (530) de l'assise (200) en position escamotée.

2. Siège (10) selon la revendication 1, dans lequel l'appui-tête (400) comporte une garniture (410) et une armature (420) qui comprend au moins une tige (421) adaptée à être montée dans un fourreau du dossier (300) et dans lequel les moyens de fixation (510) comprennent des premiers moyens d'encliquetage (520) adaptés à clipser ladite tige (421).

3. Siège (10) selon la revendication 2, dans lequel l'armature (420) de l'appui-tête (400) comporte deux tiges (421) et dans lequel les premiers moyens d'encliquetage (520) comprennent deux premiers clips (520A, 520B) adaptés à respectivement encliqueter lesdites deux tiges (421).

4. Siège (10) selon l'une des revendications 2 et 3, dans lequel les moyens d'encliquetage (520) sont situés hors de ladite cavité.

5. Siège (10) selon l'une des revendications 2 à 4, dans lequel ladite structure porteuse (100) comporte deux flancs (101, 102) et une coque (104) qui s'étend entre les deux flancs (101, 102), qui délimite ladite cavité (110), et qui porte les premiers moyens d'encliquetage (520).

6. Siège (10) selon l'une des revendications 1 à 5, dans lequel les moyens de verrouillage (530) appartiennent aux moyens de fixation (510) de l'appui-tête (400).

7. Siège (10) selon l'une des revendications 1 à 6, dans lequel l'assise (200) comporte au moins un arbre (251) articulé sur la structure porteuse (100) et dans lequel les moyens de verrouillage (530) sont fixés audit arbre (251).

8. Siège (10) selon la revendication 7, dans lequel l'assise (200) comporte deux bielles (250) chacune articulée, à une extrémité, sur une armature d'assise (210) et fixée, à une autre extrémité, audit au moins un arbre (251).

9. Siège (10) selon l'une des revendications 7 et 8, dans lequel l'appui-tête (400) comporte une garniture (410) et une armature (420) qui comprend au moins une tige (421) adaptée à être montée dans un fourreau du dossier (300) et dans lequel les moyens de verrouillage (530) comprennent des seconds moyens d'encliquetage (530A, 530B) adaptés à clipser ladite tige (421).

10. Véhicule (1) comportant un siège conducteur (2), **caractérisé en ce qu'**il comporte un siège passager (10) qui est conforme à l'une des revendications précédentes.

## Patentansprüche

1. Fahrzeugsitz (10), der aufweist:
- ein Tragstruktur (100), die einen Hohlraum (110) begrenzt,
- eine Sitzfläche (200), die zwischen einer Benutzungsstellung, in der sie den Hohlraum (110) bedeckt, und einer zurückgezogenen Stellung beweglich auf die Tragstruktur (100) montiert ist, in der sie den Zugang zum Hohlraum (110) frei lässt,
- eine Rückenlehne (300), die zwischen einer Benutzungsstellung und einer heruntergeklappten Stellung schwenkbeweglich auf die Tragstruktur (100) montiert ist, und
- eine Kopfstütze (400), die auf die Rückenlehne (300) montiert werden kann,
- wobei die Kopfstütze (400) von der Rückenlehne (300) abmontiert werden kann,
**dadurch gekennzeichnet, dass** die Tragstruktur (100) Befestigungseinrichtungen (510) aufweist, die geeignet sind, die Kopfstütze (400) in einer solchen Stellung zu blockieren, dass mindestens ein Teil der Kopfstütze (400) im Hohlraum (110) untergebracht ist, und dass Einrichtungen (530) zur Verriegelung der Sitzfläche (200) in der zurückgezogenen Stellung vorgesehen sind.

2. Sitz (10) nach Anspruch 1, wobei die Kopfstütze (400) eine Verkleidung (410) und ein Gestell (420) aufweist, das mindestens eine Stange (421) enthält, die in ein Mantelrohr der Rückenlehne (300) montiert werden kann, und wobei die Befestigungseinrichtungen (510) erste Einrasteinrichtungen (520) enthalten, die geeignet sind, die Stange (421) einzurasten.

3. Sitz (10) nach Anspruch 2, wobei das Gestell (420) der Kopfstütze (400) zwei Stangen (421) aufweist, und wobei die ersten Einrasteinrichtungen (520) zwei erste Clips (520A, 520B) enthalten, die je geeignet sind, die zwei Stangen (421) einzurasten.

4. Sitz (10) nach einem der Ansprüche 2 und 3, wobei die Einrasteinrichtungen (520) sich außerhalb des Hohlraums befinden.

5. Sitz (10) nach einem der Ansprüche 2 bis 4, wobei die Tragstruktur (100) zwei Flanken (101, 102) und eine sich zwischen den zwei Flanken (101, 102) erstreckende Schale (104) aufweist, die den Hohlraum (110) begrenzt und die ersten Einrasteinrichtungen (520) trägt.

6. Sitz (10) nach einem der Ansprüche 1 bis 5, wobei die Verriegelungseinrichtungen (530) zu den Befestigungseinrichtungen (510) der Kopfstütze (400) gehören.

7. Sitz (10) nach einem der Ansprüche 1 bis 6, wobei die Sitzfläche (200) mindestens eine an die Tragstruktur (100) angelenkte Welle (251) aufweist, und wobei die Verriegelungseinrichtungen (530) an der Welle (251) befestigt sind.

8. Sitz (10) nach Anspruch 7, wobei die Sitzfläche (200) zwei Schubstangen (250) aufweist, die je an einem Ende an ein Sitzflächengestell (210) angelenkt und an einem anderen Ende an der mindestens einen Welle (251) befestigt sind.

9. Sitz (10) nach einem der Ansprüche 7 und 8, wobei die Kopfstütze (400) eine Verkleidung (410) und ein Gestell (420) aufweist, das mindestens eine Stange (421) enthält, die geeignet ist, in ein Mantelrohr der Rückenlehne (300) montiert zu werden, und wobei die Verriegelungseinrichtungen (530) zweite Einrasteinrichtungen (530A, 530B) enthalten, die die Stange (421) einrasten können.

10. Fahrzeug (1), das einen Fahrersitz (2) aufweist, **dadurch gekennzeichnet, dass** es einen Beifahrersitz (10) aufweist, der einem der vorhergehenden Ansprüche entspricht.

## Claims

1. Vehicle seat (10) comprising:
- a carrying structure (100) that delimits a cavity (110),
- a seat part (200) mounted to move on said carrying structure (100), between a use position in which it covers said cavity (110) and a retracted position in which it allows access to said cavity (110),
- a back (300) mounted to move by tilting on said carrying structure (100), between a use position and a folded-down position, and
- a headrest (400) capable of being mounted on the back (300),
- said headrest (400) being capable of being removed from the back (300), **characterized in that** the carrying structure (100) comprises fixing means (510) adapted for immobilizing the headrest (400) in a position such that a part at least of said headrest (400) is accommodated in said cavity (110), and **in that** provision is made for means (530) for locking the seat part (200) in the retracted position.

2. Seat (10) according to Claim 1, wherein the headrest (400) comprises a trim (410) and a frame (420) that comprises at least one rod (421) adapted for mounting in a sheath of the back (300) and wherein the fixing means (510) comprise first snap-fit means (520) adapted for clipping said rod (421) .

3. Seat (10) according to Claim 2, wherein the frame (420) of the headrest (400) comprises two rods (421), and wherein the first snap-fit means (520) comprise two first clips (520A, 520B) adapted for respectively snap-fitting said two rods (421).

4. Seat (10) according to one of Claims 2 and 3, wherein the snap-fit means (520) are located outside said cavity.

5. Seat (10) according to one of Claims 2 to 4, wherein said carrying structure (100) comprises two flanks (101, 102) and a shell (104) which extends between the two flanks (101, 102), which delimits said cavity (110), and which carries the first snap-fit means (520).

6. Seat (10) according to one of Claims 1 to 5, wherein the locking means (530) belong to the means (510) for fixing the headrest (400).

7. Seat (10) according to one of Claims 1 to 6, wherein the seat part (200) comprises at least one shaft (251) articulated on the carrying structure (100), and wherein the locking means (530) are fixed to said shaft (251).

8. Seat (10) according to Claim 7, wherein the seat part (200) comprises two connecting rods (250) each articulated, at one end, on a seat-part frame (210) and fixed, at another end, to said at least one shaft (251).

9. Seat (10) according to one of Claims 7 and 8, wherein the headrest (400) comprises a trim (410) and a frame (420) that comprises at least one rod (421) adapted for mounting in a sheath of the back (300), and wherein the locking means (530) comprise second snap-fit means (530A, 530B) adapted for clipping said rod (421).

10. Vehicle (1) comprising a driving seat (2), **characterized in that** it comprises a passenger seat (10) which is in accordance with one of the preceding claims.
